Europäisches Patentamt

European Patent Office

Office européen des brevets

(11) Veröffentlichungsnummer: **0 409 112 A1**

## (12) EUROPÄISCHE PATENTANMELDUNG

(21) Anmeldenummer: 90113504.6

(22) Anmeldetag: 14.07.90

(51) Int. Cl.⁵: **B23Q 5/34**

Ein Antrag gemäss Regel 88 EPÜ auf Berichtigung der Seite 5 sowie der Ansprüche 1, 2e und 3b liegt vor. Über diesen Antrag wird im Laufe des Verfahrens vor der Prüfungsabteilung eine Entscheidung getroffen werden (Richtlinien für die Prüfung im EPA, A-V, 2.2).

(30) Priorität: 15.07.89 DE 3923557
15.07.89 DE 3923559

(43) Veröffentlichungstag der Anmeldung:
23.01.91 Patentblatt 91/04

(84) Benannte Vertragsstaaten:
CH DE FR GB IT LI

(71) Anmelder: BURKHARDT & WEBER GMBH & CO. KG KG KG
Burkhardt & Weber Strasse 57 57
D-7410 Reutlingen(DE)

(72) Erfinder: Raiser, Ernst
Feldbergstrasse, 5
D-7411 Rommelsbach(DE)
Erfinder: Lercher, Winfried
Schanzstrasse, 56
D-7410 Reutlingen-Betzingen(DE)

(74) Vertreter: Patentanwälte Phys. Bartels
Dipl.-Ing. Fink Dr.-Ing. Held
Lange Strasse 51
D-7000 Stuttgart 1(DE)

(54) **Werkzeugmaschine.**

(57) Die Erfindung betrifft eine Werkzeugmaschine mit einer Bearbeitungseinheit (14, 15), an der mindestens zwei senkrecht zueinander ausgerichtete Arbeitsspindeln (19 und 23) in zwei relativ zueinander bewegbaren Gehäusen (14 bzw. 15) gelagert sind. Mittels einer durch die Bewegung des einen Gehäuses (15) relativ zum anderen Gehäuse (14) betätigbaren Schaltkupplung (26) ist eine Spindel (23) auszukuppeln.

Fig.1

# WERKZEUGMASCHINE

Die Erfindung betrifft eine Werkzeugmaschine mit einer Bearbeitungseinheit, die eine erste und eine zweite durch die Motorwelle eines motors antreibbare Spindel aufweist, deren Drehachsen zueinander senkrecht sind, wobei die Bearbeitungseinheit an einem Ständer mittels einer an ihr vorgesehenen ersten Führung längs deren Führungsachse verschiebbar gelagert ist, die parallel zur Drehachse einer der beiden Spindeln verläuft, und wobei eine Schaltkupplung vorhanden ist, die von einer Stelleinrichtung schaltbar ist, um eine der Spindeln von der Motorwelle abzukuppeln oder mit dieser zu kuppeln.

Bei Werkzeugmaschinen mit mehreren, von einer Motorwelle angetriebenen Wellen ist es oft erwünscht, eine Welle wahlweise von der Motorwelle zu lösen und nur im Bedarfsfall mit der Motorwelle zu verbinden. Dies ist besonders dann erwünscht, wenn die Werkzeugmaschine neben mindestens einer zur Motorwelle nicht parallelen Welle mindestens eine zur Motorwelle parallele Welle aufweist, da beim Antrieb dieser Wellen diejenigen Wellen, die zur Motorwelle nicht parallel verlaufen, über ein Winkelgetriebe angetrieben werden müssen. In den Fällen, bei denen die Wellen mit zur Motorwelle paralleler Achse nicht benötigt werden, kann man sie ohne große Nachteile leerlaufen lassen.

Etwas anderes ist der Fall, wenn eine zur Motorwelle nicht parallel verlaufende Welle nicht benötigt wird, weil bei einer Übertragung der Drehbewegung durch ein Winkelgetriebe das Winkelgetriebe unnötig beansprucht und erwärmt wird. Es ist daher zweckmäßig, in solchen Fällen die Welle, deren Achse nicht parallel zur Achse der Motorspindel verläuft, von der Motorwelle lösen zu können.

Der Erfindung liegt die Aufgabe zugrunde, eine Werkzeugmaschine der eingangs genannten Art zu schaffen, bei der das Lösen und Wiederanschließen einer Welle an die Motorwelle bei einer möglichst einfachen Bauweise einwandfrei durchgeführt werden kann.

Diese Aufgabe ist gemäß der Erfindung bei einer Werkzeugmaschine mit den eingangs genannten Merkmalen dadurch gelöst,

a) daß die Schaltkupplung ein drehfest mit der Motorwelle verbundenes Antriebsteil, ein feststehendes Halteteil und ein drehfest mit der von der Motorwelle abkuppelbaren Spindel verbundenes Abtriebsteil aufweist,

b) daß das Abtriebsteil von der Stelleinrichtung aus einer mit dem Halteteil verbundenen Ruhestellung in eine mit dem Antriebsteil verbundene Arbeitsstellung bewegbar ist, und

c) daß ein Winkelmeßsystem vorhanden ist, mittels dessen die Motorwelle in einer genau definierten Drehwinkel-Nullstellung anhaltbar ist, in der das Abtriebsteil mit dem Halteteil verbindbar ist.

Durch die Verwendung einer Schaltkupplung gemäß den Merkmalen a) und b) wird erreicht, daß zum Schalten der Schaltkupplung nur eine geradlinige Bewegung erforderlich ist, um das Abtriebsteil aus seiner Ruhestellung in seine Arbeitsstellung und zurück zu bewegen.

Dadurch, daß gemäß dem Merkmal a) ein feststehendes Halteteil vorgesehen ist, mit dem das Abtriebsteil in der Ruhestellung verbunden ist, wird erreicht, daß die Bewegung des Abtriebsteiles zum Ausschalten der Kupplung gleichzeitig dazu benutzt wird, um dieses Abtriebsteil und damit die mit ihm verbundene Spindel in einer ganz bestimmten Stellung festzulegen. Wird nun gemäß dem Merkmal c) ein Winkelmeßsystem benutzt, dann wird dadurch gleichzeitig erreicht, daß die eine Spindel nach dem Auskuppeln mittels des mit ihr verbundenen Abtriebsteiles in einer dieser Nullstellung entsprechenden Stellung gehalten wird.

Dies ist bei Werkzeugmaschinen mit einem automatischen Werkzeugwechselsystem besonders wichtig, da für ein solches automatisches Werkzeugwechselsystem eine genaue definierte Nullstellung für den Werkzeugwechsel eine zwingende Vorbedingung ist.

Die geradlinige Bewegbarkeit des Abtriebsteiles kann bei der eingangs genannten Werkzeugmaschine besonders vorteilhaft dadurch erreicht werden,

a) daß die erste Spindel und die zweite Spindel in einem ersten bzw. zweiten Gehäuse gelagert sind, die zusammen die Bearbeitungseinheit bilden,

b) daß das erste Gehäuse den Motor, die Motorwelle und die erste Führung aufweist,

c) daß das zweite Gehäuse längs einer geradlinigen zweiten Führung am ersten Gehäuse zwischen einer Ruhestellung und einer Arbeitsstellung bewegbar ist,

d) daß die Schaltkupplung durch die Bewegung des zweiten Gehäuses längs der zweiten Führung schaltbar ist,

e) daß die zweite Spindel über die Schaltkupplung mit der Motorwelle so verbunden ist, daß das zweite Gehäuse in der Ruhestellung die zweite Spindel von der Motorwelle ab- und in der Arbeitsstellung ankuppelt, und

f) daß die Führungsachse der ersten Führung senkrecht zur Führungsachse der zweiten Führung und parallel zu der zweiten Spindel verläuft.

Unter Motorwelle wird hierbei eine Welle verstanden, die für den Antrieb mindestens der beiden genannten Arbeitsspindeln vorgesehen ist und selbst direkt oder indirekt von einem Antrieb antreibbar ist.

Durch das Merkmal a) wird die Möglichkeit geschaffen, gemäß dem Merkmal c) für die Verbindung des zweiten Gehäuses mit dem ersten eine sehr einfache Verbindungsführung, z.B. eine Schwalbenschwanzverbindung zu benutzen.

Für die wahlweise Kupplung der zweiten Spindel mit der Motorwelle kann hierbei eine einfache Schaltkupplung gemäß dem Merkmal d) verwendet werden, bei der durch die Verschiebung des ersten Gehäuses am zweiten ein Glied zum Schalten der Kupplung bewegt wird.

Bei einer besonders vorteilhaften Ausführungsform der Erfindung ist vorgesehen,

a) daß die Schaltkupplung im ersten Gehäuse gelager ist und ein drehfest mit der Motorwelle verbundenes Antriebsteil, ein feststehendes Halteteil und ein mit der zweiten Spindel drehfest verbundenes Abtriebsteil aufweist, das im ersten Gehäuse axial verschiebbar ist,

b) daß das Abtriebsteil durch die Bewegung des zweiten Gehäuses aus einer mit dem Halteteil verbundenen Ruhestellung in eine mit dem Abtriebsteil verbundene Arbeitsstellung bewegbar ist und

c) daß ein Winkelmeßsystem vorhanden ist, mittels dessen die Motorwelle in einer genau definierten Drehwinkelnullstellung anhaltbar ist, in der das Abtriebsteil mit dem Halteteil verbindbar ist.

Hierbei ist es besonders vorteilhaft, beim Schaltgetriebe vorzusehen, daß das Abtriebsteil als axial verschiebbare Keilwelle oder Keilnabe ausgebildet ist und daß das Halteteil und das Antriebsteil dem Abtriebsteil angepaßte Keilnaben bzw. Keilwellenprofile aufweisen.

Besonders vorteilhaft ist es hierbei als Stelleinrichtung einen Hubzylinder vorzusehen, den man auch bei sehr großen Werkzeugmaschinen, bei denen auch das zweite Gehäuse verhältnismäßig schwer ist, so dimensionieren kann, daß er die Verschiebung des zweiten Gehäuses und damit das Abtriebsteil der Schaltkupplung ohne weiteres verschieben kann.

Dadurch, daß die ganze Bearbeitungseinheit mittels der am ersten Gehäuse vorgesehenen ersten Führung längs deren Führungsachse in einem Ständer bewegt werden kann, ist es möglich, diese erste Führung vertikal auszurichten, so daß dann ein Werkstück auf einem nur in einer Horizontalebene bewegbaren Tisch bis auf seine Unterseite allseitig durch die Werkzeuge in den beiden Spindeln bearbeitet werden kann.

Sieht man hierbei vor, daß die Führungsachse der zweiten Führung parallel zu der Achse der ersten Spindel ausgerichtet ist, dann kann man die Anordnung so treffen, daß, wenn sich das zweite Gehäuse in seiner Ruhestellung befindet, der Raum um die Werkzeugaufnahme der ersten Spindel allseitig für ein in dieser Werkzeugaufnahme sitzendes Werkzeug frei ist. Dadurch ist es erreichbar, daß die Arbeitsstellung der zweiten Spindel durch die Arbeitsstellung des zweiten Gehäuses bestimmt wird und die Arbeitsstellung der ersten Spindel durch die Ruhestellung des zweiten Gehäuses bestimmt wird.

Ein Ausführungsbeispiel einer Werkzeugmaschine gemäß der Erfindung ist im folgenden an Hand der Zeichnung im einzelnen beschrieben.

Es zeigen:

Fig. 1 eine schaubildliche Darstellung der in dem Ausführungsbeispiel einer Werkzeugmaschine enthaltenen Bearbeitungseinheit, wobei die vertikale und die horizontale Werkzeugspindel in der Zeichnung nur angedeutet sind;

Fig. 2 und 3 der Fig.1 entsprechende Darstellungen, in denen aus Übersichtlichkeitsgründen einige Teile weggelassen, dafür in Fig.1 weggelassene Verkleidungen der Spindeln in ihren beiden verschiedenen Stellungen dargestellt sind,

Fig. 4 einen Vertikalschnitt durch die Achse der Verbindungswelle der Vertikalspindel mit der Motorwelle;

Fig. 5 eine schaubildliche Darstellung eines Seilgetriebes für die Bewegung einer Verkleidung der Horizontalspindel.

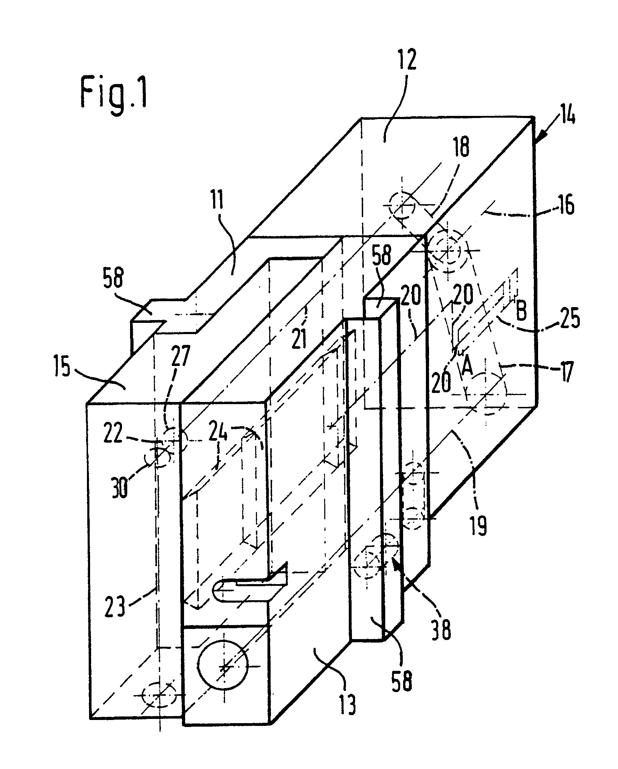

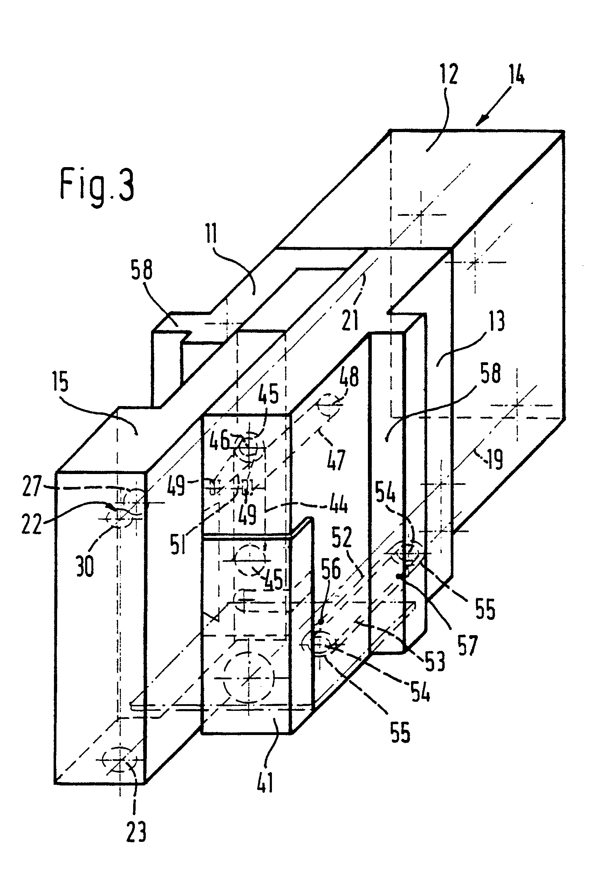

Die in den Fig.1 bis 3 dargestellte Bearbeitungseinheit weist ein aus drei miteinander fest verbundenen Teilen 11, 12 und 13 bestehendes, als Ganzes mit 14 bezeichnetes Antriebsgehäuse und ein Vertikalspindelgehäuse 15 auf. In dem Teil 12 des Antriebsgehäuses 14 ist eine nur strichpunktiert angedeutete waagerechte Motorwelle 16 gelagert, die über Zahnriemen 17 und 18 eine in den Gehäuseteilen 12 und 13 gelagerte, in der Zeichnung nur strichpunktiert dargestellte Horizontalspindel 19 bzw. über eine in den Fig.1 bis 3 nur strichpunktiert dargestellte Verbindungswelle 21 und ein ebenfalls nur schematisch dargestelltes Winkelgetriebe 22 eine strichpunktiert dargestellte Vertikalspindel 23 antreibt. Das Vertikalspindelgehäuse 15 ist mit dem Teil 13 des Antriebsgehäuses 14 durch eine in Fig.1 gestrichelt dargestellte, als Verbindungsführung dienende Schwalbenschwanzverbindung 24 so verbunden, daß das Vertikalspindelgehäuse 15 aus der in Fig.1 dargestellten Stellung parallel zur Achse der Horizontalspindel 19 in die in Fig.3 dargestellte Stellung relativ zum Antriebsgehäuse 14 nur geradlinig verschiebbar ist. Für diese Verschiebebewegung ist ein in Fig.1 strichpunktiert dargestellter Hubzylinder 25 vorgesehen, von dem der eigentliche Zylinder im Antriebsgehäuse 14 gelagert ist und dessen Kolbenstange über ein in der Zeichnung nur strichpunktiert dargestelltes Gestänge 20 am Vertikalspindelgehäuse 15 angreift.

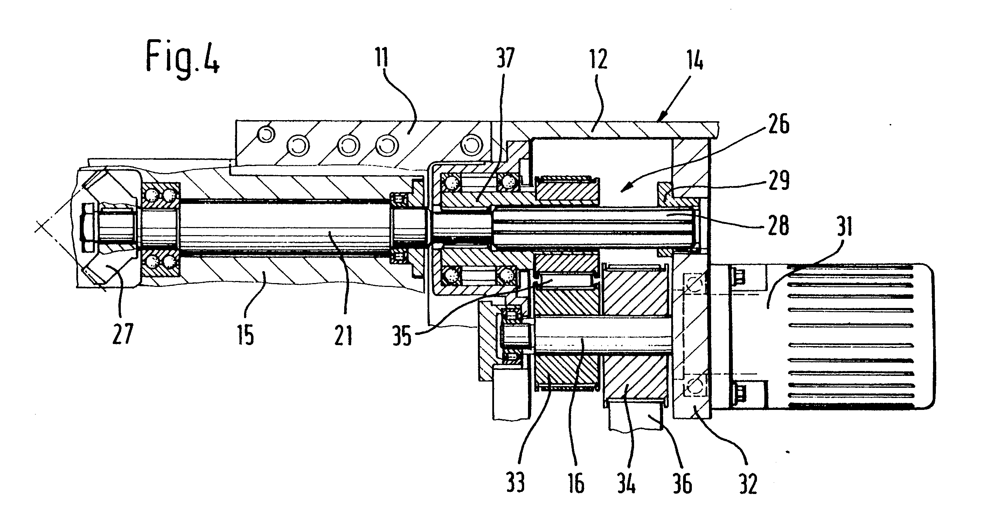

Die in Fig.1 dargestellte Stellung der beiden Gehäuse, 14 und 15 zueinander entspricht der Ruhestellung der Vertikalspindel 23, bei der also nur die Horizontalspindel 19 für die Bearbeitung des Werkstückes anwendbar ist. Die in Fig.3 dargestellte herausgefahrene Stellung des Vertikalspindelgehäuses 15 entspricht der Arbeitsstellung der Vertikalspindel 23, in der das Werkstück von dem in der Vertikalspindel 23 eingespannten Werkzeug bearbeitbar ist. Durch die geradlinige Verschiebebewegung der beiden Gehäuse 14 und 15 zueinander wird eine in Fig.4 dargestellte und als Ganzes mit 26 bezeichnete Schaltkupplung so betätigt, daß in der in den Fig.1 und 4 dargestellten Ruhestellung des Vertikalspindelgehäuses 15 die Verbindungswelle 21 von der Motorwelle 16 abgekuppelt und in der Arbeitsstellung des Vertikalspindelgehäuses 15 die Verbindungswelle 21 mit der Motorwelle 16 gekuppelt ist.

In Fig.4 ist die im Vertikalspindelgehäuse 15 drehbar und axial nicht verschiebbar gelagerte Verbindungswelle 21 dargestellt, die an ihrem linken Ende ein Kegelrad 27 des Winkelgetriebes 22 trägt. Dieses Kegelrad 27, das in den Fig.1 bis 3 nur gestrichelt dargestellt ist, ist im dauernden Eingriff mit dem in den Fig.1 bis 3 ebenfalls nur strichpunktiert dargestellten Kegelrad 30 der Vertikalspindel.

Das in den Gehäuseteil 12 des Antriebsgehäuses 14 hineinragende, in Fig.4 rechte Ende 28 der Verbindungswelle 21 hat ein Keilwellenprofil. Für den formschlüssigen Eingriff des Endes 28 in der Ruhestellung des Vertikalspindelgehäuses 15 ist im Antriebsgehäuse 14 eine Buchse 29 befestigt, deren Hohlraum ein Keilnabenprofil aufweist, das dem Keilwellenprofil des Endes 28 genau angepaßt ist.

Für den Antrieb der Motorwelle 16 ist in Fig.4 ein Motor 31 dargestellt, der an einer Innenwand 32 des Antriebsgehäuses angeflanscht ist. An der Motorwelle 16 sind zwei Zahnriemenscheiben 33 und 34 befestigt, die über Zahnriemen 35 bzw. 36 mit einer Antriebshülse 37 bzw. der Horizontalspindel 19 verbunden sind. Dadurch ist die Motorwelle 16 mit der Horizontalspindel 19 durch das so gebildeten Zahngetriebe dauernd verbunden.

Die Antriebshülse 37 ist drehbar aber axial unverschiebbar im Gehäuseteil 12 des Antriebsgehäuses 14 gelagert. Durch sie hindurch greift die Verbindungswelle 21 mit ihrem Ende 28. An ihrem der Buchse 29 abgekehrten Ende ist die Antriebshülse 37 auf ihrer Innenseite, ebenso wie die Büchse 29, mit einem inneren Keilnabenprofil versehen, das dem Keilwellenprofil des Endes 28 genau angepaßt ist und sich axial von dem Ende der Hülse 37 zur Buchse 29 nur so weit erstreckt, daß, wenn das Ende 28 der Verbindungswelle 21 in die Buchse 29 eingreift, das Keilwellenprofil des Endes 28 aus dem Keilnabenprofil der Hülse 37 herausgetreten ist. Dadurch wird erreicht, daß die Hülse 37 als Antriebsteil, die Buchse 29 als Halteteil und das Ende 28 als Abtriebsteil der Kupplung 26 wirken und die Kupplung allein durch die gerade Verschiebung des Vertikalspindelgehäuses 15 aus der in den Fig.1 und 4 dargestellten Ruhestellung in die in Fig.3 dargestellte Arbeitsstellung geschaltet wird. In der Ruhestellung des Gehäuses 15 wird die Verbindungswelle 21 und damit die Vertikalspindel 23 durch die Buchse 29 in einer genau definierten Drehwinkelstellung festgehalten. In der Arbeitsstellung des Vertikalspindelgehäuses 15 greift das Keilwellenprofil des Endes 28 in das Keilnabenprofil der Hülse 37 ein. Dadurch wird die Motorwelle 16 mit der Verbindungswelle 21 gekuppelt.

Um die Horizontalspindel 19 in einer genau definierten Null-Stellung anhalten zu können, ist ein an sich bekanntes in Fig.1 als Ganzes mit 38 bezeichnetes Winkelmeßsystem vorgesehen, das mit der Horizontalspindel 19 auf Drehung verbunden ist und mittels dessen die Motorwelle 16 beim Abschalten des Motors 31 in der Stellung angehalten wird, die genau der Null-Stellung der Horizontalspindel 19 zugeordnet ist. In dieser Stellung wird dann auch die Antriebshülse 37 für die Vertikalspindel 23 angehalten. Damit das Ende 28 beim Bewegen des Vertikalspindelgehäuses 15 aus seiner Arbeitsstellung in seine Ruhestellung während des Stillstandes der Antriebswelle 16 genau in die Buchse 29 hineinpaßt, wird die Buchse 29 beim Einsetzen genau in einer solchen Stellung festgelegt. Ordnet man dieser Drehstellung die Null-Stellung der Vertikalspindel zu, dann wird dadurch erreicht, daß die Vertikalspindel beim Abschalten der Motorwelle in ihrer Null-Stellung stehen bleibt und die Verbindungswelle 21 sich in einer solchen Stellung befindet, daß ihr Ende 28 bei der Verschiebung des Vertikalspindelgehäuses 15 aus seiner Arbeitsstellung in seine Ruhestellung in die Buchse 29 hineinpaßt, wo dann die Verbindungswelle 21 und damit auch die Vertikalspindel in ihrer Null-Stellung festgehalten werden, bis sie wieder benötigt werden. Da bei jedem Stillsetzen des Motors die Motorwelle 16 und damit die Antriebshülse 37 sich in der definierten Null-Stellung befinden, kann das Ende 28 beim Verschieben des Gehäuses 15 in seine Arbeitsstellung passend in die Hülse 37 eingreifen.

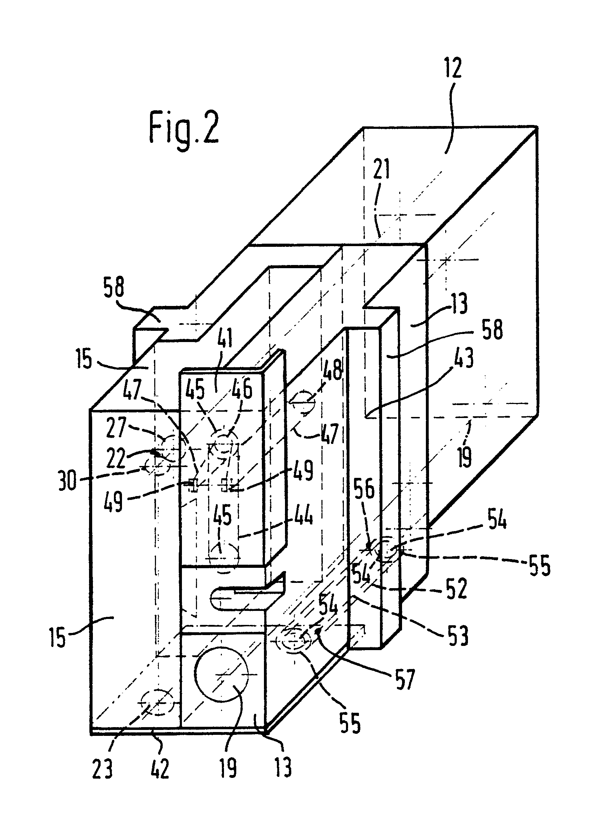

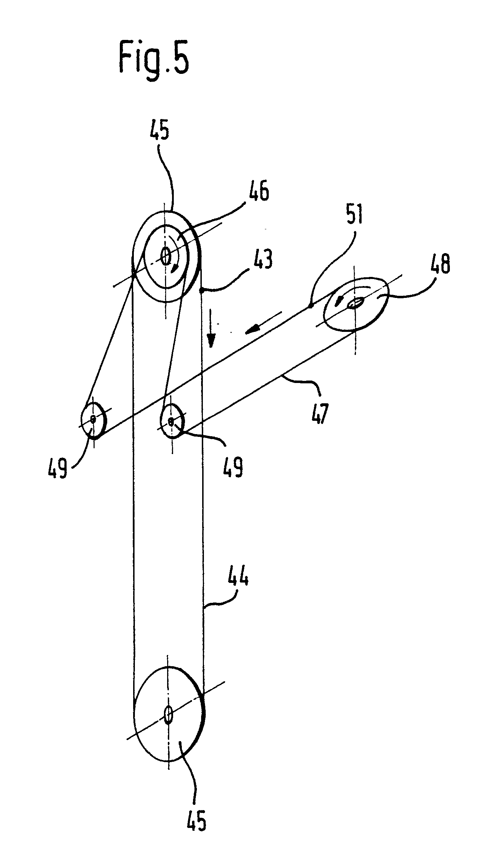

Um die jeweils leere Werkzeugaufnahme zu verkleiden, sind (Fig.2 und 3) für die Horizontalspindel 19 eine als Winkel ausgebildete Verkleidung 41 und für die Vertikalspindel 23 eine plattenförmige Verkleidung 42 vorgesehen. Die längs der vorderen Endfläche des Gehäuseteils 13 vertikal geführte Verkleidung 41 ist mit dem Punkt 43 eines Seiles 44 verbunden. Das Seil 44 ist, wie das in Fig.5 dargestellt ist, um zwei übereinander angeordnete Rollen 45 geführt, die um zur Achse der Horizontalspindel 19 parallele Achsen drehbar im Gehäuseteil 13 gelagert sind. Die obere Rolle 45 wird von einer mit der Rolle 45 zu dieser koaxialen kleineren Rolle 46 engetrieben, über die ein zweites Seil 47 geführt ist, das um eine um eine vertikale Achse drehbare Rolle 48 und zwei um zur Achse der Horizontalspindel senkrechte horizontale Achsen drehbare Rollen 49 geführt und durch letztere zur Rolle 46 umgelenkt wird. Alle genannten Rollen und damit die Seile 44 und 47 sind im Gehäuseteil 13 gelagert. Das Seil 47 ist mit einem Punkt 51 mit dem Vertikalspindelgehäuse 15 verbunden. Wird nun das Vertikalspindelgehäuse 15 aus der in Fig.2 dargestellten Stellung in die in Fig.3 dargestellte Stellung verschoben, dann wird die Rolle 48 durch das Seil 47 von oben gesehen im Gegenuhrzeigersinn gedreht, was eine Drehung der Rolle 46 im Uhrzeigersinn und damit eine Bewegung der Verkleidung 41 aus der in Fig.2 und 5 in die in Fig.3 dargestellte Stellung zur Folge hat und umgekehrt.

Ein entsprechendes einfacher ausgebildetes Seilgetriebe ist für die Bewegung der an der unteren Fläche des Gehäuseteils 13 geführten Verkleidung 42 für die Werkzeugaufnahme der Vertikalspindel 23 vorgesehen (Fig.2 und 3). Diese Verschiebbarkeit der Verkleidung 42 ist nicht in allen Fällen notwendig. In Fällen, in denen der Verschiebeweg des Gehäuses 25 ausreichend groß ist, kann die Verkleidung 42 am Gehäuseteil 13 befestigt sein. Dann bedeckt die Platte, wie das aus Fig.2 ersichtlich ist, die Werkzeugaufnahme der Spindel 23, wenn sich das Vertikalspindelgehäuse 15 in der in Fig.2 dargestellten Ruhestellung befindet. Sobald sich jedoch das Vertikalspindelgehäuse 15 in seine Arbeitsstellung bewegt hat, die in Fig.3 dargestellt ist, tritt die Aufnahme der Vertikalspindel 23 aus dem Bereich der Verkleidung 42 heraus.

In Fällen, wo diese Verschiebebewegung des Vertikalspindelgehäuses 15 für den Austritt aus dem Bereich der Verkleidung 42 nicht ausreicht, kann auch die Platte 42, wie das in den Fig.2 und 3 dargestellt ist, an der Unterfläche des Gehäuseteils 13 verschiebbar angeordnet sein. Für die Verschiebung der Verkleidung 42 wird hierbei ein ganz einfaches Seilgetriebe benötigt, das im einfachsten Fall nur ein Seil benötigt. Im dargestellten Fall sind zwei Seile 52 und 53 vorgesehen, die um zwei Rollenpaare 54 und 55 geführt sind, die verschiedene Durchmesser haben, so daß eine Übersetzung erreichbar ist. Beim dargestellten Fall ist das Seil 52 mit seinem Punkt 56 mit dem Vertikalspindelgehäuse 15 und das andere Seil 53 mit seinem Punkt 57 mit der Verkleidung 42 verbunden, so daß durch die Bewegung des Vertikalspindelgehäuses 15 aus seiner in Fig.2 dargestellten Ruhestellung in die in Fig.3 dargestellte Arbeitsstellung die Verkleidung 42 aus der in Fig.2 dargestellten vorderen Stellung in die in Fig.3 dargestellte zurückgezogene Stellung bewegt wird. Anstelle eines Seiles kann ein anderes, geeignetes Zugmittel, z.B. eine Kette, vorgesehen sein.

Die in den Fig.1 bis 3 dargestellte Baueinheit kann im Gestell einer Werkzeugmaschine fest angeordnet sein, wenn die für die Bearbeitung eines Werkstückes erforderlichen Bewegungen von einem das Werkstück tragenden Arbeitstisch durchgeführt werden. Diese Baueinheit kann aber auch mit den seitlichen Führungsleisten 58 in einem Schlitten vertikal geführt sein, der seinerseits in einer senkrecht zur Horizontalspindel ausgerichteten waagerechten Führung auf einem zweiten Schlitten geführt ist, der in einer zur Führung des ersten Schlittens senkrecht verlaufenden waagerechten Führung geführt ist. Die verschiedenen Führungsmöglichkeiten von Werkzeugtischen und Gehäusen für Arbeitsspindeln sind allgemein bekannt, so daß diesbezüglich auf den Stand der Technik verwiesen wird.

Um sicherzustellen, daß der mehrteilige Aufbau des Antriebsgehäuses 14, insbesondere im letztgenannten Fall, allen auftretenden Belastungen standhält und ein Einklemmen des Gehäuseteiles 15 zwischen den Gehäuseteilen 11 und 13 mit Sicherheit vermieden wird, kann das Antriebsgehäuse 14 auch einstückig ausgeführt werden. Es können auch alle drei Gehäuseteile 11, 12 und 13 durch obere und untere in der Zeichnung nicht dargestellte Platten fest miteinander verbunden sein.

Die vorstehende Beschreibung und die Zeichnung beschränken sich nur auf die Angabe von Merkmalen, die für die beispielsweise Verkörperung der Erfindung wesentlich sind. Soweit daher Merkmale in der Beschreibung und in der Zeichnung offenbart und in den Ansprüchen nicht genannt sind, dienen sie erforderlichenfalls auch zur Bestimmung des Gegenstandes der Erfindung.

**Ansprüche**

1. Werkzeugmaschine mit einer Bearbeitungseinheit (14, 15), die eine erste und eine zweite durch die Motorwelle (16) eines Motors (31) antreibbare Spindel (19 bzw. 23) aufweist, deren Drehachsen zueinander senkrecht sind, wobei die Bearbeitungseinheit an einem Ständer mittels einer an ihr vorgesehenen ersten Führung (58) längs deren Führungsachse verschiebbar gelagert ist, die parallel zur Drehachse einer der beiden Spindeln verläuft, und wobei eine Schaltkupplung (26) vorhanden ist, die von einer Stelleinrichtung schaltbar ist, um eine der Spindeln von der Motorwelle (31) abzukuppeln oder mit dieser zu kuppeln, dadurch gekennzeichnet,

a) daß die Schaltkupplung (26) ein drehfest mit der Motorwelle (16) verbundenes Antriebsteil (37), ein feststehendes Halteteil (29) und ein drehfest mit der von der Motorwelle (16) abkuppelbaren Spindel (23) verbundenes Abtriebsteil (28) aufweist,

b) daß das Abtriebsteil (28) von der Stelleinrichtung aus einer mit dem Halteteil (29) verbundenen Ruhestellung in eine mit dem Antriebsteil (37) verbundene Arbeitsstellung bewegbar ist, und

c) daß ein Winkelmeßsystem (38) vorhanden ist, mittels dessen die Motorwelle (16) in einer genau definierten Drehwinkel-Nullstellung anhaltbar ist, in der das Abtriebsteil (28) mit dem Halteteil (29) verbindbar ist.

2. Werkzeugmaschine nach dem Oberbegriff des Anspruches 1, dadurch gekennzeichnet,

a) daß die erste Spindel (19) und die zweite Spindel (23) in einem ersten bzw. zweiten Gehäuse (14 bzw. 15) gelagert sind, die zusammen die Bearbeitungseinheit bilden,

b) daß das erste Gehäuse (14) den Motor (31), die Motorwelle (16) und die erste Führung (58) aufweist,

c) daß das zweite Gehäuse (15) längs einer geradlinigen zweiten Führung (24) am ersten Gehäuse (14) zwischen einer Ruhestellung und einer Arbeitsstellung bewegbar ist,

d) daß die Schaltkupplung (26) durch die Bewegung des zweiten Gehäuses (15) längs der zweiten Führung (24) schaltbar ist,

e) daß die zweite Spindel (19) über die Schaltkupplung (26) mit der Motorwelle (16) so verbunden ist, daß das zweite Gehäuse (15) in der Ruhestellung die zweite Spindel (23) von der Motorwelle (16) ab- und in der Arbeitsstellung ankuppelt, und

f) daß die Führungsachse der ersten Führung (58) senkrecht zur Führungsachse der zweiten Führung (24) und parallel zu der zweiten Spindel (23) verläuft.

3. Werkzeugmaschine nach Anspruch 2, dadurch gekennzeichnet,

a) daß die Schaltkupplung (26) im ersten Gehäuse gelagert ist und ein drehfest mit der Motorwelle (16) verbundenes Antriebsteil (37), ein feststehendes Halteteil (29) und ein mit der zweiten Spindel (23) drehfest verbundenes Abtriebsteil (28) aufweist, das im ersten Gehäuse (14) axial verschiebbar ist,

b) daß das Abtriebsteil (28) durch die Bewegung des zweiten Gehäuses (15) aus einer mit dem Halteteil (29) verbundenen Ruhestellung in einem mit dem Abtriebsteil (37) verbundene Arbeitsstellung bewegbar ist und

c) daß ein Winkelmeßsystem vorhanden ist, mittels dessen die Motorwelle (16) in einer genau definierten Drehwinkelnullstellung anhaltbar ist, in der das Abtriebsteil (28) mit dem Halteteil (29) verbindbar ist.

4. Werkzeugmaschine nach Anspruch 1 oder 3, dadurch gekennzeichnet,

- daß das Abtriebsteil (28) als axial verschiebbare Keilwelle oder Keilnabe ausgebildet ist und

- daß das Halteteil (29) so wie das Antriebsteil (37) dem Abtriebsteil (28) angepaßte Keilnaben bzw. Keilwellenprofile aufweisen.

5. Werkzeugmaschine nach einem der Ansprüche 1 bis 4, dadurch gekennzeichnet, daß als Stelleinrichtung ein Hubzylinder (25) vorgesehen ist.

6. Werkzeugmaschine nach einem der Ansprüche 1 bis 5, dadurch gekennzeichnet, daß die zweite Spindel (23) senkrecht zur Motorwelle (16) gelagert ist.

7. Werkzeugmaschine nach einem der Ansprüche 1 bis 6, dadurch gekennzeichnet, daß die erste Spindel zur Motorwelle parallel gelagert und von dieser direkt antreibbar ist.

8. Werkzeugmaschine nach einem der Ansprüche 2 bis 7, dadurch gekennzeichnet, daß die Führungsachse der zweiten Führung parallel zu der Achse der ersten Spindel (19) ausgerichte ist.

9. Werkzeugmaschine nach einem der Ansprüche 2 bis 8, dadurch gekennzeichnet, daß die zweite Spindel (23) über ein Winkelgetriebe (22) mit einer Verbindungswelle (21) verbunden und mit dieser in dem zweiten Gehäuse (15) drehbar gelagert ist und daß die Verbindungswelle (21) parallel zu der ersten Spindel (19) und damit auch parallel zur Motorwelle (16) gelagert ist und mit dieser über die Schaltkupplung (26) verbunden ist.

10. Werkzeugmaschine nach einem der Ansprüche 2 bis 9, dadurch gekennzeichnet, daß für mindestens eine Werkzeugspindel (19, 23) eine bewegbare Verkleidung (41 bzw. 42) vorhanden ist, die durch die Bewegung des zweiten Gehäuses (15) gegenüber dem ersten Gehäuse (14) bewegbar ist, so daß in der Ruhestellung der jeweils einen Spindel diese verkleidet und die jeweils andere Spindel freigegeben ist.

11. Werkzeugmaschine nach Anspruch 9, dadurch gekennzeichnet, daß für die Kopplung der Verkleidung (41) mit der Bewegung des zweiten Gehäuses (15) Zugmittelgetriebe (43) bis (54) vorhanden sind.

# Fig.1

Fig.2

Fig.3

Fig.4

# Fig.5

| | **EINSCHLÄGIGE DOKUMENTE** | | EP 90113504.6 |

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | DE - B - 1 303 638<br>(F. DECKEL)<br>    * Gesamt *<br>    -- | 1,2,6,<br>7,9 | B 23 Q 5/34 |
| A | SOVIET INVENTIONS ILLUSTRATED,<br>Sektions P,Q, Woche 8648,<br>14. Jänner 1987<br>DERWENT PUBLICATIONS LTD.,<br>London, P54<br>    * SU - 1197-792-A<br>      (ODESS SPEC TOOLS) *<br>    -- | 1,6,7,<br>9 | |
| A | WO - A1 - 89/03 277<br>(SAN ROCCO MACHINE)<br>    * Anspruch 1 *<br>    ---- | 1,3 | |
| | | | RECHERCHIERTE SACHGEBIETE (Int Cl⁵) |
| | | | B 23 Q 1/00<br>B 23 Q 5/00<br>B 23 C 1/00 |

Der vorliegende Recherchenbericht wurde für alle Patentansprüche erstellt.

| Recherchenort<br>WIEN | Abschlußdatum der Recherche<br>03-09-1990 | Prüfer<br>NIMMERRICHTER |
|---|---|---|

KATEGORIE DER GENANNTEN DOKUMENTEN
X : von besonderer Bedeutung allein betrachtet
Y : von besonderer Bedeutung in Verbindung mit einer
    anderen Veroffentlichung derselben Kategorie
A : technologischer Hintergrund
O : nichtschriftliche Offenbarung
P : Zwischenliteratur
T : der Erfindung zugrunde liegende Theorien oder Grundsätze

E : alteres Patentdokument, das jedoch erst am oder
    nach dem Anmeldedatum veroffentlicht worden ist
D : in der Anmeldung angefuhrtes Dokument
L : aus andern Gründen angeführtes Dokument

& : Mitglied der gleichen Patentfamilie, überein-
    stimmendes Dokument

EPA Form 1503 03 82